Europäisches Patentamt

(19) European Patent Office

Office européen des brevets

(11) Publication number: **0 186 092**
**B1**

(12) **EUROPEAN PATENT SPECIFICATION**

(45) Date of publication of patent specification: **31.01.90**

(51) Int. Cl.⁵: **G 05 D 3/14**

(21) Application number: **85116042.4**

(22) Date of filing: **16.12.85**

(54) **Power transmission.**

(30) Priority: **20.12.84 US 684265**
**20.12.84 US 684266**

(43) Date of publication of application:
**02.07.86 Bulletin 86/27**

(45) Publication of the grant of the patent:
**31.01.90 Bulletin 90/05**

(84) Designated Contracting States:
**BE DE FR GB IT SE**

(56) References cited:
**EP-A-0 111 064**
**US-A-2 954 514**
**US-A-3 775 655**

(73) Proprietor: **Vickers, Incorporated**
**1401 Crooks Road**
**Troy Michigan 48084 (US)**

(72) Inventor: **Gunda, Rajamouli**
**679 Rutgers Road**
**Rochester Michigan 48063 (US)**
Inventor: **Taplin, Lael Brent**
**8369 Golfside Drive**
**Union Lake Michigan 48085 (US)**

(74) Representative: **Blumbach Weser Bergen**
**Kramer Zwirner Hoffmann Patentanwälte**
**Sonnenbergerstrasse 43**
**D-6200 Wiesbaden 1 (DE)**

Courier Press, Leamington Spa, England.

## Description

The present invention is directed to an electrohydraulic servo system comprising valve and actuator means adapted to variably position a load, position sensing means coupled to said actuator and load to provide an electrical actual position signal indicative of actual position at said actuator and load, command signal means including integration means to provide a position command signal and comparing means for providing an error signal to control said valve and actuator means as a function of a difference between said actual position signal and said position command signal.

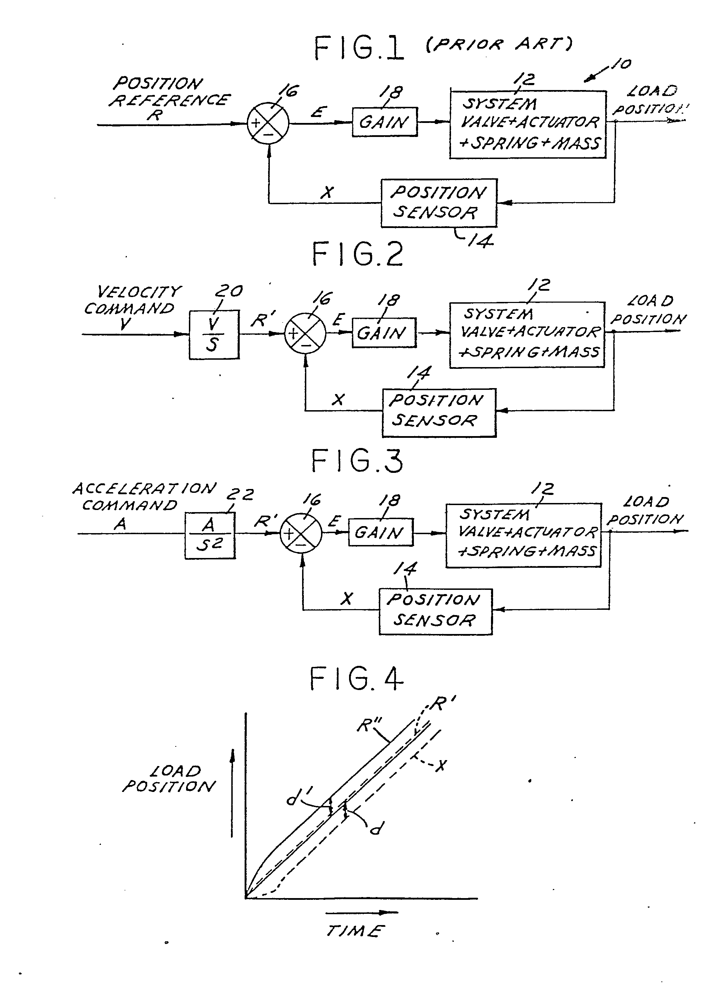

In US—A—2,954,514 such a system is disclosed (Figs. 1 through 4) which inherently comprises a transfer function as a relation between the error signal and the servo output quantity (Stellgröße). In order to stabilize the servo output quantity, the error signal is modified to include not only positional components, but also components of velocity and acceleration which are fed to the comparing means through the command signal means and the feedback means. In practice, a network of electrical resistors and a chain of integrators are coupled to the input of the error signal providing means. Such circuitry is intended to compensate for servo lag and inertia problems. The time derivative function of the input quantity is combined with the input quantity in accordance with an overall transfer function of the servo mechanism so as to modify the input quantity in accordance with the transfer function which is the inverse of the servo mechanism overall transfer function.

In an ideal position servo mechanism, the transfer function is merely a constant. However, in a real servo mechanism, such a transfer function cannot be obtained. So a following error is inherent in a real servo mechanism which means that the actual position will lag behind the desired position.

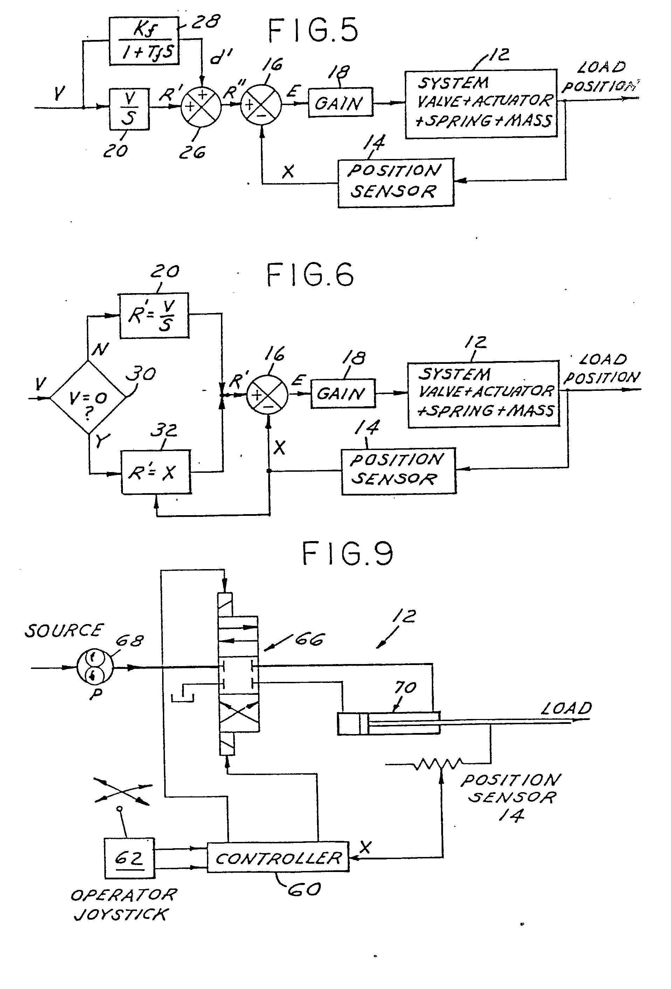

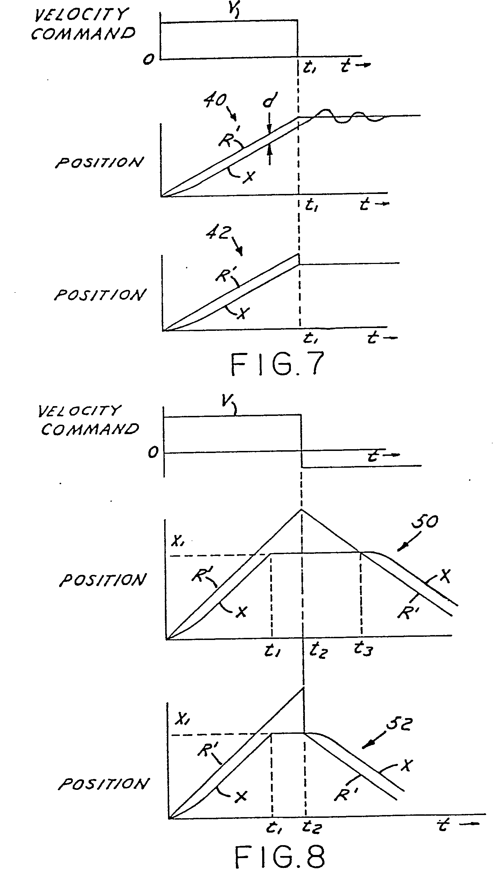

In the Fig. 5, 6 embodiment of US—A—2,954,514 a velocity servo system is considered which includes a velocity feedback signal fed to the comparing means. In the case of an electro-hydraulic servo system, providing a noise-free velocity feedback signal is costly.

Electro-hydraulic valve control systems for vehicles and like applications often require not only position control of the system output, but also velocity and/or acceleration control as well. For example, an excavator may require position control of the bucket teeth during a digging cycle, velocity control during other modes of operation, and acceleration control during swing drive. It is conventional to provide separate position, velocity and acceleration sensors for closed loop feedback control during the position, velocity and acceleration demand modes, respectively. However, provision of three transducers adds to the overall cost and complexity of the system.

In an electro-hydraulic servo system, which has a velocity or acceleration control mode and wherein the load position is sensed, the lag leads to creep or dead time in the system output.

It is therefore an object of the invention to provide an electro-hydraulic servo system of the kind referred to above, which includes the velocity and/or acceleration control modes and which, in such control modes, avoids creeping or dead time in the system output.

This problem is solved by additionally comprising the characterizing features of claim 1, namely the command signal means is adapted to operate either in a velocity demand mode wherein a velocity command signal is integrated to form a facsimile position command signal, or in an acceleration demand mode wherein an acceleration command signal is integrated to form a velocity command signal and then the thus formed velocity command signal is itself integrated to form a facsimile position command signal, the facsimile position command signal in either case being used as said position command signal, only one feedback sensor is employed, and testing means is responsive to said velocity command signal independently of said integration means for automatically setting the value of said facsimile position command signal equal to the value of said actual position signal when said velocity command signal is equal to zero.

In the case of the velocity control mode, when the velocity command signal is made zero, the integration means still have an output which is different to the actual position indicating signal, since there is the lag discussed above. With the invention, the output of the integrator is set to the value of the actual position indicating signal (in general not zero). By this feature, the error signal which is the difference between the actual position signal and the motion command signal is made zero and the servo mechanism is halted without further creeping.

The additional means according to invention are also useful in case of physically limiting the position of the load when the motion command is still applied. Without the additional means of invention, the integrator means would deliver an output signal which leads to a dead time when giving a fresh motion command. By resetting the integrator means onto the value of the actual position signal, such dead time is avoided.

The invention is described together with the accompanying drawings in which:

Fig. 1 is a functional block diagram of a position demand servo system,

Fig. 2 is a functional block diagram of a velocity demand servo system,

Fig. 3 is a functional block diagram of an acceleration demand system,

Fig. 4 is a graphic illustration useful in explaining the so-called following error,

Fig. 5 is a functional block diagram of a modification to Fig. 2,

Fig. 6 is a functional block diagram of a servo mechanism for eliminating creep and dead time upon change of motion direction,

Figs. 7 and 8 are graphic illustrations for explaining operation of the servomechanism of Fig. 6, and

Fig. 9 is a schematic diagram of an exemplary electrohydraulic control system for implementing the invention.

Fig. 1 illustrates a conventional position command electrohydraulic servo control system 10 as comprising a valve actuator system 12 which includes an electrohydraulic valve coupled by an actuator to a load. The actuator system, including the load, is characterized by mass and a spring. A position transducer 14 is suitably mechanically coupled to the actuator and load to provide an electrical actual position signal X (Ist-Wert) as a function of actual actuator and load position. A position command or reference signal R (Soll-Wert) is fed to a summer 16 which provides an error signal E (Regelabweichung) as a function of the difference between the command reference signal R and actual position signal X. The error signal E is amplified by an amplifier 18 which delivers an actuating signal (Stellgröße) which controls the operation of the actuator system 12. It will be appreciated that summer 16 and gain 18 would typically be combined in a single analog amplifier. System 12 and transducer 14 may be of any suitable types, and indeed may be contained in a single assembly. Position command reference R may be generated by any suitable means, such as an operator joystick.

Fig. 2 illustrates how to modify Fig. 1 for implementing velocity demand control as known on principle. A velocity command signal V, which may be generated by an operator joystick for example, is fed to an integrator 20, division of the signal V by the Laplace character "S" being a standard technique for illustrating an integration operation.

The resulting signal is called facsimile position command signal R', and is fed to summer 16. The remainder of the circuit operates as in Fig. 1. Thus, the servomechanism with position feedback only is adapted to respond to velocity command input. Provision of integrator 20 is less expensive than replacing or supplementing the position transducer 14 with a velocity transducer (as in US—A—2,954,514), and is more reliable (less noisy) than attempts to differentiate the output of the position transducer to provide velocity feedback.

Fig. 3 illustrates a modification to Fig. 1 for implementing acceleration demand control as known on principle. An acceleration demand signal A, from an operator joystick for example, is fed to a double integrator 22. The output of integrator 22, which provides a facsimile position command signal R', is fed to summer 16. It will be appreciated, of course, that one or both of the circuits of Figs. 2 and 3 may be combined with that of Fig. 1, or with each other, to provide a system having multiple differing command inputs.

At any given time when the facsimile position command signal R' (Fig. 2 or 3) is increasing (or decreasing), actual position X will lag behind desired facsimile position command R' by an amount d (Fig. 4). This lag is termed "following error" in the art and is a function of the mechanical characteristics of system 12, and also of the magnitude of the rate of change of the facsimile command signal R', i.e. a function of the velocity V.

Fig. 5 illustrates a modification to the embodiment of Fig. 2 for reducing or eliminating such following error, also known on principle. Referring to Fig. 5, the velocity command signal V is fed through the integrator 20 to a first summer 26. The command signal V is also fed to a multiplier 28. The output of multiplier 28, which is an offset signal d' (Fig. 4 and 5), is fed to a second input of summer 26 where signal d' is added to facsimile command signal R' to provide a corrected or composite facsimile position command signal R" to summer 16. Within multiplier 28, the velocity signal V is multiplied by the factor $K_f/(1+T_fS)$, wherein $K_f$ is a constant selected as a function of the following error, S is a Laplace character, and $T_f$ is a time constant selected to provide exponential initialization as shown in Fig. 4, and thus avoid system jerk. After the initialization time determined by the constant $T_f$, the offset d' displaces the system position input command signal R" such that actual position X tracks desired position R' as shown in Fig. 4.

It will be appreciated, of course, that the modification of Fig. 5 may also be implemented in Fig. 3 by dividing the double integration stage 22 into two single integration stages: V'=A/S and R'=V'/S. The output V' of the first stage could then be fed to a multiplier 28, and the second stage V'/S used at 20 in Fig. 5.

Fig. 6 shows how to avoid creeping and dead time according to invention. The input velocity command signal V is first tested at 30 for equality with zero. If the velocity command signal V is non-zero, the signal V is integrated at 20 to provide the facsimile position command signal R', which is fed to summer 16 as in Fig. 2. However, if the velocity command is equal to zero, logic is routed to the stage 32, which receives an X input from sensor 14, and the facsimile position command R' is set equal to X.

Fig. 7 illustrates operation of the embodiment of Fig. 6 for eliminating end position creep due to the following error. Velocity command V from an operator joystick or the like is uniform, and position signals R' and X increase uniformly as shown at 40. At time $t_1$, the actual load position X is observed by the operator to be at the desired location, and velocity command signal V is reduced to zero. Facsimile position command signal R' is accordingly horizontal and uniform. However, due to the following error d previously discussed, actual load position X is lagging facsimile position command R', so that the actual load continues to move under control of the error signal E (equal to R'—X). In accordance with the invention of Fig. 6, however, operation of which is illustrated in the lower graph 42 of Fig. 7, the facsimile position command signal R' is set equal to the actual position command X at time t1 when V equals zero. Thus, the actuator and load remain at the position desired by the operator.

Fig. 8 illustrates operation of the system of Fig. 6 where the load reaches its limit position $x_1$ at time $t_1$, which limit may be set by physical system constraints, for example. The operator, however, continues to demand constant velocity until time $t_2$, and then reverses direction. In the illustration at 50, the facsimile position command R' continues to increase between times $t_1$ and $t_2$ even though the load cannot follow. The position demand reverses slope after time $t_2$, but does not intersect the limit position signal $x_1$ until time $t_3$. Thus, there is no load movement during the dead time $t_2$—$t_3$. After time $t_3$, load position X follows (but lags behind) facsimile position command R'.

Operation of the invention of Fig. 6 is illustrated in the lower graph 52 in Fig. 8. At time $t_2$, when the velocity signal V passes through zero, the facsimile position command signal R' is set equal to X. Thereafter, the facsimile position signal R' decreases from limit $x_1$, and load position can follow. There is no dead time $t_2$—$t_3$ as illustration 50. It will be appreciated, of course, that the system of Fig. 6 is combined with one of the previously described systems.

It is presently preferred to implement all of the stages 20, 22, 28, 30 and 32 in a suitably programmed digital computer/controller 60, as shown in Fig. 9, which receives and periodically samples inputs from the operator joystick 62 and from the load position sensor 14. Controller 60 provides outputs to the solenoids of a valve 66, for example, which selectively feeds hydraulic fluid under pressure from a source and pump 68 to a drive cylinder 70. The piston of cylinder 70 is coupled to the load. Analog circuitry could also be employed in controller 60, as will be apparent to the artisan.

## Claims

1. An electro-hydraulic servo system comprising valve and actuator means (12) adapted to variably position a load,

position sensing means (14) coupled to said actuator and load to provide an electrical actual position signal (X) indicative of actual position at said actuator and load,

command signal means including integration means (20) to provide a position command signal (R)

and comparing means (16) for providing an error signal (E) to control said valve and actuator means (12) as a function of a difference between said actual position signal (X) and said position command signal (R),

characterized in that

said command signal means is adapted to operate either in a velocity demand mode wherein a velocity command signal (V) is integrated (20, 22) to form a facsimile position command signal (R'), or in an acceleration demand mode wherein an acceleration command signal (A) is integrated to form a velocity command signal (V) and then the thus formed velocity command signal (V) is itself integrated to form a facsimile position command signal (R'), the facsimile position command signal (R') in either case being used as said position command signal (R), in that only one feedback sensor (14) is employed, and in that testing means (30, 32) is responsive to said velocity command signal (V) independently of said integration means (20) for automatically setting the value of said facsimile position command signal (R') equal to the value of said actual position signal (X) when said velocity command signal (V) is equal to zero.

2. The electro-hydraulic servo system set forth in claim 1 further comprising

compensating means (26, 28) for compensating for the following error (d) at said valve and actuator means (12) and load, wherein said compensating means (26, 28) is responsive to said motion command signal (V) and offsets said facsimile position command signal (R') by an amount (d') which corresponds to the value of said following error (d) such producing a corrected facsimile position command signal (R'') to be transmitted to said comparing means (16) as said position command signal (R) and wherein said compensating means (26, 28) includes exponential initialization means ($T_fS$) responsive to said motion command signal (V) when producing said offset amount (d') so as to avoid jerk at said valve and actuator means (12) and load.

3. The electro-hydraulic servo system according to claim 1 or 2,

wherein said command signal means, said integration means (20, 22) and said testing means (30, 32) are included in a common controller (60) which is a suitably programmed digital computer.

## Patentansprüche

1. Elektrohydraulisches Servosystem mit folgenden Merkmalen:

Ventil- und Betätigungseinrichtungen (12) sind zur variablen Verstellung einer Last ausgebildet;

mit dem Betätiger und der Last ist eine Positionsabtasteinrichtung (14) gekoppelt, um ein elektrisches IST-Positionssignal (X) abzugeben, welches für die aktuelle Stellung des Betätigers und der Last kennzeichnend ist;

eine Befehlssignaleinrichtung weist eine Integrationseinrichtung (20) zur Abgabe eines Soll- oder Positionsbefehlssignals (R) auf;

eine Vergleichseinrichtung (16) dient zur Abgabe eines Regelabweichungs- oder Fehlersignals (E) zur Steuerung der Ventil- und Betätigungseinrichtung (12) als eine Funktion einer Differenz zwischen dem Ist-Positionssignal (X) und dem Soll-Positionssignal (R);

gekennzeichnet durch folgende Merkmale:

die Befehlssignaleinrichtung ist so ausgebildet, daß sie entweder in einer Geschwindigkeitsanforderungsbetriebsart läuft, wobei das Geschwindigkeitsbefehlssignal (V) zur Bildung eines Faksimile-Positionsbefehlssignals (R') integriert (20, 22) wird, oder in einer Beschleunigungsanforderungsbetriebsart läuft, wobei ein Beschleunigungsbefehlssignal (A) zur Bildung eines Geschwindigkeitsbefehlssignals (V) integriert und danach das so gebildete Geschwindigkeitsbefehlssignal (V) seinerseits zur Bildung eines Faksimile-Positionsbefehlssignals (R') integriert wird, wobei ferner das Faksimile-Positionsbefehlssignal (R') in beiden Fällen als das Soll-Positionssignal (R) verwendet wird;

es wird nur eine Abtasteinrichtung (14) im Rückkopplungszweig verwendet;

eine Prüfeinrichtung (30, 32) spricht auf das Geschwindigkeitsbefehlssignal (V) unabhängig von der Integrationseinrichtung (20) an und setzt automatisch den Wert des Faksimile-Positionsbefehlssignals (R') gleich dem Wert des Ist-Positionssignals (X), wenn das Geschwindigkeitsbefehlssignal (V) gleich Null ist.

2. Elektrohydraulisches Servosystem nach Anspruch 1, dadurch gekennzeichnet, daß eine Kompensationseinrichtung (26, 28) zur Kompensation des Nachlauffehlers (d) bei der Ventil- und Betätigungseinrichtung (12) sowie der Last vorgesehen ist, daß die Kompensationseinrichtung (26, 28) auf das Bewegungsbefehlssignal (V) anspricht und das Faksimile-Positionsbefehlssignal (R') um einen Betrag (d') versetzt, der dem Wert des Nachlauffehlers (d) entspricht, so daß ein korrigiertes Faksimile-Positionsbefehlssignal (R'') erzeugt wird, welches an die Vergleichseinrichtung (16) als das Soll- oder Positionsbefehlssignal (R) übermittelt wird, und daß die Kompensationseinrichtung (26, 28) eine exponentielle Einleitungseinrichtung (T_fS) umfaßt, die auf das Bewegungsbefehlssignal (V) anspricht, wenn der versetzte Betrag (d') erzeugt wird, um so Rucken beim Ventil und bei der Betätigungseinrichtung (12) sowie der Last zu vermeiden.

3. Elektrohydraulisches Servosystem nach Anspruch 1 oder 2, dadurch gekennzeichnet, daß die Befehlssignaleinrichtung, die Integrationseinrichtung (20, 22) und die Prüfeinrichtung (30, 32) in einer gemeinsamen Regel- und Steuerschaltung (60) einbezogen sind, die durch einen geeigneten, programmierten, digitalen Computer gebildet wird.

**Revendications**

1. Un système d'asservissement électrohydraulique comprenant:

des moyens formant valve et actionneur (12), conçus pour positionner de façon variable une charge,

des moyens détecteurs de position (14), reliés à cet actionneur et à cette charge, pour délivrer un signal électrique de position réelle (X) représentatif de la position réelle de l'actionneur et de la charge,

des moyens de détermination d'un signal de consigne, comprenant des moyens intégrateurs (20), pour délivrer un signal de consigne de position (R), et

des moyens comparateurs (16), pour délivrer un signal d'erreur (E) permettant de commander les moyens (12) formant valve et actionneur, fonction de la différence entre le signal de position réelle (X) et le signal de consigne de position (R),

caractérisé en ce que:

les moyens de détermination d'un signal de consigne sont conçus pour fonctionner soit en un mode de consigne de vitesse, dans lequel on intègre (20, 22) un signal de consigne de vitesse (V) de manière à former un signal de consigne de position figurée (R'), soit en un mode de régulation d'accélération, dans lequel on intègre un signal de consigne d'accélération (A) de manière à donner un signal de consigne de vitesse (V), le signal de consigne de vitesse ainsi produit (V) étant lui-même intégré de manière à donner un signal de consigne de position figurée (R'), le signal de consigne de position figurée étant utilisé dans l'un ou l'autre cas pour constituer ledit signal de consigne de position (R),

on n'utilise qu'un seul capteur de rétroaction (14), et

il est prévu des moyens de test (30, 32) fonctionnant en réponse au signal de consigne de vitesse (V) indépendamment des moyens intégrateurs (20), pour donner automatiquement au signal de consigne de position figurée (R') une valeur égale à la valeur du signal de position réelle (X) lorsque le signal de consigne de vitesse (V) est égal à zéro.

2. Le système d'asservissement électrohydraulique de la revendication 1, comprenant en outre:

des moyens compensateurs (26, 28), pour compenser l'erreur de suivi (d) des moyens formant valve et actionneur (12) et de la charge,

ces moyens compensateurs (26, 28) fonctionnant en réponse au signal de consigne de déplacement (V) et décalant le signal de consigne de position figurée (R') d'une quantité (d') correspondante à la valeur de l'erreur de suivi (d), produisant ainsi un signal de consigne de position figurée corrigé (R') à appliquer aux moyens comparateurs (16) en tant que signal de consigne de position (R),

ces moyens compensateurs (26, 28) comprenant des moyens d'initialisation exponentiels (T_fS) fonctionnant en réponse au signal de consigne de déplacement (V) lorsqu'est produite la valeur de décalage (d') afin d'éviter l'apparition de suroscilations sur les moyens formant valve et actionneur (12) et sur la charge.

3. Le système d'asservissement électro-hydraulique de l'une des revendications 1 ou 2, dans lequel les moyens de détermination d'un signal de consigne, les moyens intégrateurs (20, 22) et les moyens de test (30, 32) sont réunis dans un contrôleur commun (60) formé par un calculateur numérique programmé de façon appropriée.

FIG.1 (PRIOR ART)

FIG.2

FIG.3

FIG.4

# FIG.5

$$\frac{Kf}{1+TjS}$$ 28

$$\frac{V}{S}$$ 20

V

R' 26

R" 16

d'

E

GAIN 18

SYSTEM VALVE+ACTUATOR +SPRING+MASS 12

LOAD POSITION

X

POSITION SENSOR 14

# FIG.6

$$R' = \frac{V}{S}$$ 20

V=0 ? 30

N

Y

$$R' = X$$ 32

V

R'

E 16

GAIN 18

SYSTEM VALVE+ACTUATOR +SPRING+MASS 12

LOAD POSITION

X

POSITION SENSOR 14

# FIG.9

SOURCE

P 68

66

12

70

LOAD

POSITION SENSOR 14

62

OPERATOR JOYSTICK

CONTROLLER 60

X

2

EP 0 186 092 B1

FIG.7

FIG.8